# EUROPEAN PATENT SPECIFICATION

(11) **EP 0 309 963 B1**
(45) Date of publication and mention of the grant of the patent: **04.08.1993**
(21) Application number: 88115809.1
(22) Date of filing: 26.09.1988
(51) Int. Cl.: G01C 19/56

(54) **Vibration gyro having an H-shaped vibrator**
Oszillierender Kreisel mit H-förmigem Vibrator
Gyroscope oscillant avec un vibreur en forme de h

(30) Priority: 28.09.1987 JP 243490/87; 31.03.1988 JP 79158/88
(43) Date of publication of application: 05.04.1989
(73) Proprietor: NEC HOME ELECTRONICS, LTD., Osaka-shi Osaka (JP); NEC CORPORATION, Tokyo (JP)
(72) Inventor: Fujimura, Seiichi, Yodogawa-ku Osaka-shi Osaka (JP); Yamada, Hiroaki, Minato-ku Tokyo (JP); Konno, Tadashi, Yonezawa-shi Yamagata (JP); Yano, Takeshi, Minato-ku Tokyo (JP); Kumasaka, Toru, Yodogawa-ku Osaka-shi Osaka (JP)
(74) Representative: Diehl, Hermann O. Th., Dr.

(56) References cited:
- US-A- 3 141 100
- US-A- 3 206 986
- US-A- 4 703 655
- PATENT ABSTRACTS OF JAPAN, vol. 11, no. 319 (P-627)[2766], 17th October 1987; & JP-A-62 106 314 (TOKYO KOKU KEIKI K.K.) 16-05-1987

## Description

The present invention relates to a vibration gyro having a substantially H-shaped vibrator formed by substantially U-shaped members.

A vibration gyro operates upon the principle of Coriolis force. Coriolis force generates when an angular velocity is applied to a body moving at a speed. Direction of Coriolis force is perpendicular to that of the angular velocity. In a vibration gyro, there is provided a vibrator as the body described above, and the velocity is given by vibrating it. When an angular velocity is applied to the vibrator, Coriolis force generates as a displacement of the vibrator. As a result, the angular velocity is detected from an amount of the displacement of the vibrator.

In order to obtain a stable and accurate detecting voltage, it is necessary to suppress an error voltage generated by a detecting piezoelectric element due to a leakage of a driving voltage by a mechanical influence caused by a driving vibration of a vibrator and an electrical influence caused by a voltage which is applied to a driving piezoelectric element. On the other hand, the vibration gyro is recently required to be small in size and lightened.

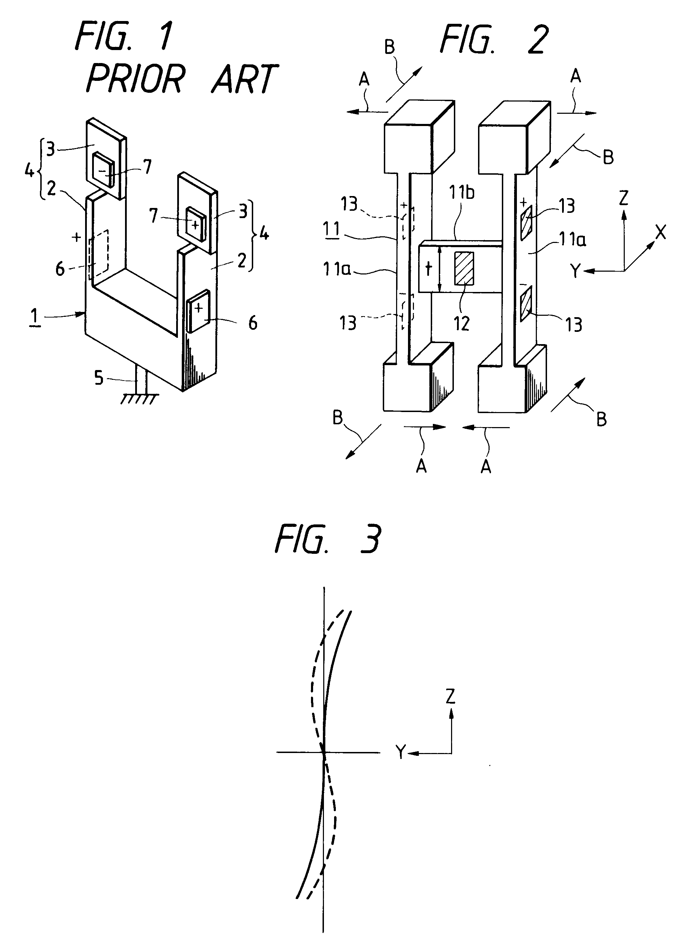

There has been known a conventional vibration gyro of a fork type as shown in Fig. 1. In the conventional vibration gyro, a fork-shaped vibrator 1 is provided with two vibrating members 4 each composed of a driving vibration plate 2 and a detecting vibration plate 3 disposed perpendicularly to the driving vibration plate 2. The vibrator 1 is supported at a lower end thereof by a supporting bar 5 extending vertically. A driving piezoelectric element 5 is mounted on each of the driving vibration plate 2 and a detecting piezoelectric element 7 is mounted on each of the detecting vibration plate 3, wherein polarities of which are arranged as shown in Fig. 1.

In the conventional vibration gyro shown in Fig. 1, the driving vibration plate 2, that is a driving vibrating part of the vibrator 1 is disposed separately from and perpendicularly to the detecting vibration plate 3, that is a detecting vibration part of the vibrator. Under such a structure, the driving vibration may not influence to the detecting piezoelectric element 7 and therefore a leakage of the driving voltage will be suppressed. However, since the supporting bar 5 does not support at a gravitational center of the vibrator 1, a noise vibration may be generated by the vibrator 1 thereby deteriorating a detecting accuracy of Coriolis force.

US-A-4 703 655 relates to a gyro apparatus comprising vibrating means in the form of tuning forks, driving means fixed to the base portion of the tuning fork and detecting means formed of a rectangular-shaped hinge, a base portion to which both ends of the rectangular-shaped hinge are fixed and a pair of detection piezoelectric elements fixed to the rectangular-shaped hinge spaced apart from each other in its up and down direction and in which the tuning fork is fixed to the central portion of the rectangular-shaped hinge between the pair of detection piezoelectric elements such that the tuning fork axis becomes substantially perpendicular to the longitudinal direction of the rectangular-shaped hinge portion and parallel to the plane of the rectangular-shaped hinge and the center of mass of the tuning fork coincides with the center of the rectangular-shaped hinge.

US-A-3 141 100 relates to a mechanical multi-purpose piezoelectric resonance device, comprising at least one pair of substantially identical crystal quartz prismatic members having substantially rectangular end faces, said members being disposed in parallel and opposite relationship with respect to equal side faces forming H-shaped vibrating means, means for driving said vibrating means, and detecting means interconnecting the prismatic members; this interconnecting means consist of at least two components with an interlayer being provided between two abutting surfaces.

A vibration gyro having an H-shaped vibrator has been proposed in commonly assigned U.S. Patent Application filed on August 26, 1988, which is shown in Figs. 2 and 3.

In this vibration gyro, there is provided an H-shaped vibrator 11 having two driving parts 11a and a plate-like connecting part 11b connecting to each of the driving parts 11a at a center portion thereof. A torsional detecting piezoelectric element 12 is mounted on the connecting part 11b. Four driving piezoelectric elements 13 are mounted on an outer surface in a Y direction of each of the driving parts 11a. The upper and lower two elements 13 are opposite in polarity to each other as shown in Fig. 2. When the driving piezoelectric elements 13 are actuated, the vibrator 11 vibrates in a vibration mode wherein the upper parts and lower parts displace in a direction of an arrow A opposite to each other as shown in Fig. 2. Under this condition, when an angular velocity around a Z axis is applied to the vibrator 11, Coriolis force is generated directing an arrow B which is perpendicular to the direction of the driving vibration. Then, the connecting part 11b connecting the two driving parts 11a vibrates with a torsion due to double forces by the Coriolis force. The torsional detecting piezoelectric element 12 detects the torsion of the connecting part 11b of the vibrator thereby determining the Coriolis force applied to the vibration gyro.

In the vibration gyro described above, if a thickness t of the connecting part 11b is made large, the driving parts 11a vibrate in a primary vibration mode in which every driving parts 11a forms a cantilever as shown in a solid line in Fig. 3. On the other hand, if the thickness t of the connecting part 11b is made small, the driving parts 11a vibrate in a secondary vibration mode in which every driving parts 11a forms as shown in a dot line in Fig. 3. In both the conditions above, Coriolis force is generated so that an amount of the force is in proportion to a value determined by differentiating by time the displacement of the driving parts 11a shown in Fig. 3. The Coriolis force directs perpendicular to the driving direction of the vibrator 11. The force applied to the connecting part 11b is determined by integrating a distribution of the Colioris force, and the force in case that the driving parts vibrate in the primary vibration mode is larger than that in case that they vibrate in the secondary mode. Therefore, the thickness t of the connecting part 11b should be large in order to obtain the Coriolis force at the largest.

From the above fact, it may raise a difficulty in that when the Coriolis force is intended to be the largest, the thickness t of the connecting part 11b becomes large and, on the other hand, when the vibrator 11 is intended to be compact by thinning the thickness t of the connecting part 11b, the Coriolis force becomes small.

Accordingly, an object of the present invention is to prevent the above-described difficulty accompanying a conventional vibration gyro and to further improve the vibration gyro having an H-shaped vibrator proposed by the present applicants to provide a vibration gyro which is smaller in size but detecting voltage of coriolis force at the largest. This object is solved by the vibration gyro according to claim 1. Further advantageous features of the vibration gyro according to the present invention are evident from the dependent claims.

A vibrator of the present invention is formed by adhering two U-shaped members opposite to each other viewing from the front through a piezoelectric plate generating a voltage between the opposite surfaces in accordance with a torsional force applied therebetween. In this structure, the vibrator having four extending arm portions vibrates in a primary vibration mode in which upper and lower arms direct opposite to each other and left and right arms direct opposite to each other viewing from the front, and all of the arms vibrate in a cantilever form. Under this condition, if the vibrator rotates about a vertical axis of the vibrator, Coriolis force is generated. Thus, the invention provides a vibration gyro having a substantially H-shaped vibrator formed by substantially U-shaped members which is compact and capable of detecting Coriolis force at the largest amount.

The Coriolis force acts as a double force which rotates the upper and lower U-shaped members in opposite direction to each other. The double forces act as a torsional force to the piezoelectric plate disposed between the U-shaped members and therefore the plate can detect a voltage in proportion to the Coriolis force. As explained above, all of the four arm parts of the vibrator vibrate in the primary vibration mode forming a cantilever, the double forces by the Coriolis force become the largest and therefore the detecting voltage of the piezoelectric plate can be obtained at the largest.

Fig. 1 is a perspective view showing a conventional vibration gyro.

Fig. 2 is a perspective view illustrating a proposed vibration gyro having an H-shaped vibrator.

Fig. 3 is a brief sketch showing vibration modes of the vibrator.

Fig. 4 is a perspective view of a vibration gyro embodying a first embodiment of the present invention.

Fig. 5 is a front view showing the vibration gyro of Fig. 4.

Figs. 6A and 6B illustrate arrangements of a torsional piezoelectric element according to the present invention.

Figs. 7A and 7B illustrate another arrangements of a torsional piezoelectric element of the invention.

Fig. 8 is a perspective view illustrating a vibration gyro according to a second embodiment of the present invention.

Fig. 9 is a top view showing the vibration gyro of Fig. 8.

Fig. 10 is a front view showing the vibration gyro of Fig. 8.

Fig. 11 is a side view showing the vibration gyro of Fig. 8.

Fig. 12 is a perspective view showing a third embodiment of a vibration gyro according to the present invention.

Fig. 13 is a perspective view showing a fourth embodiment of a vibration gyro according to the present invention.

Fig. 14 is a top view showing a projecting part shown in Fig. 13.

Fig. 15 is a top view showing an arrangement of a projecting part shown in Fig. 13.

Fig. 16 is a top view showing another arrangement of a projecting part shown in Fig. 13.

The present invention will now be described in detail with reference to accompanying drawings.

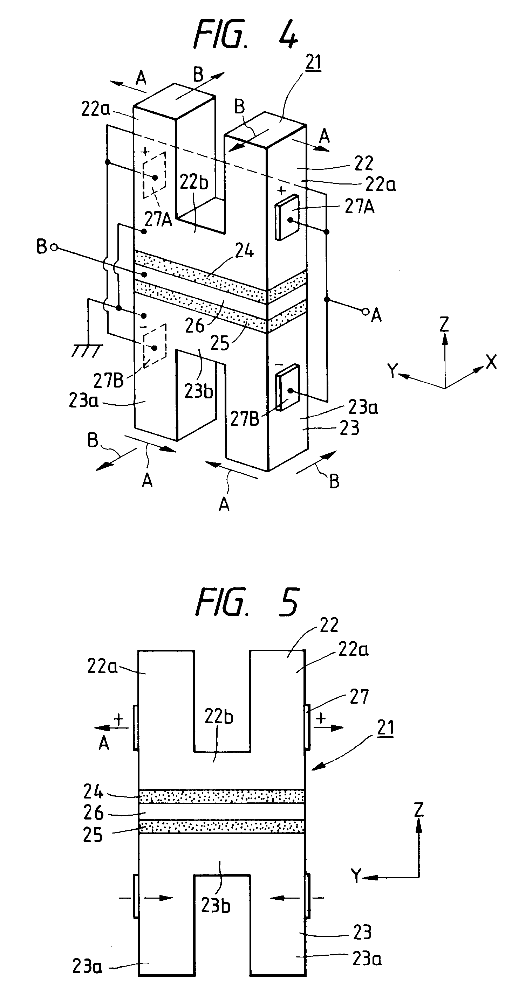

Fig. 4 is a perspective view showing a vibration gyro according to a first embodiment of the present invention.

In this embodiment, a vibrator 21 is composed of a pair of substantially U-shaped members 22 and 23 formed of a metal material, two torsional piezoelectric plates 24 and 25 and a metal plate 26 sandwiched between the plates 24 and 25 and thereby forming a substantially H-shaped vibrator. The piezoelectric plates 24 and 25 are disposed in an opposite direction with respect to the metal plate 26.

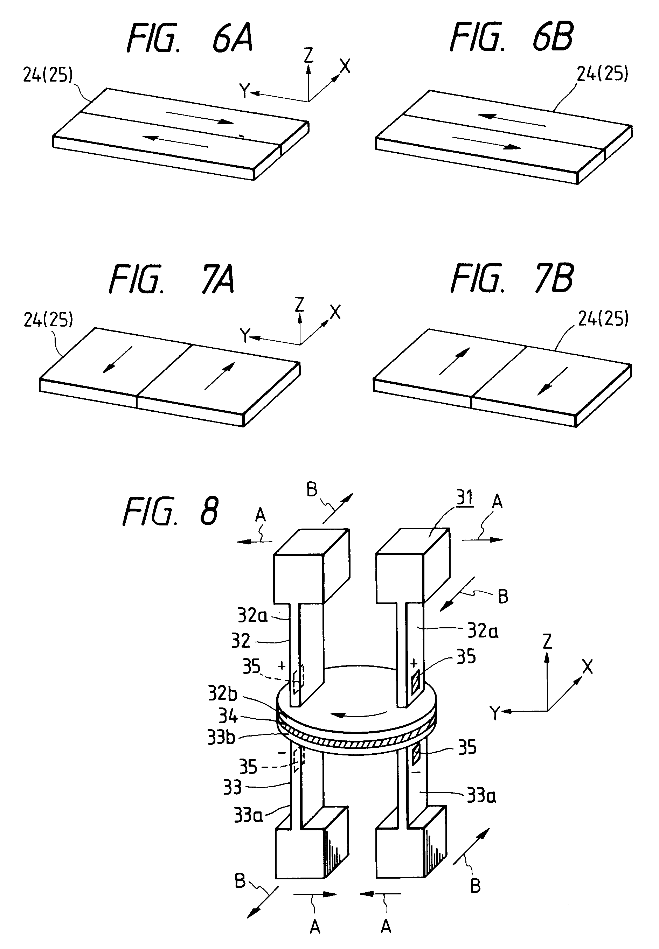

The piezoelectric plates 24 and 25 may be formed of a piezoelectric material generating a voltage in accordance with a slipping deformation and arranged as shown in Figs. 6 and 7. In such a structure, when a voltage is applied between the opposed surfaces of the piezoelectric plates 24 and 25, the plates 24 and 25 torsionally deform in a plane of X-Y.

The U-shaped members 22 and 23 are provided with leg parts 22a and 23a, respectively. Four driving piezoelectric elements 27A and Z7B are mounted on outer sides in Y direction of each of the leg parts 22a and 23a. The upper piezoelectric elements 27A and the lower piezoelectric elements 27B are opposite in polarity to each other. Electric wires are connected to the vibrator 21 as shown in Fig. 4. That is, a common alternating voltage is applied to the driving piezoelectric elements 27A and 27B by an oscillating circuit or the like not shown through a terminal A whereas the upper and lower U-shaped members 22 and 23 are earthed. Each of the piezoelectric plates 24 and 25 outputs a voltage through the metal plate 26 sandwitched therebetween. The vibrator 21 is rotatably supported by a supporting shaft not shown passing vertically through a center portion of base parts 22b and 23b of the U-shaped members 22 and 23.

The operation of the vibration gyro thus structured will be described.

When an alternating voltage is applied to the driving piezoelectric elements 27A and 27B, the leg parts 22a,22b,23a and 23b of the vibrator 21 vibrate in a vibration mode in which the upper and lower leg parts direct opposite to each other and right and left parts direct opposite to each other as indicated in arrows A. In the vibration mode of the vibrator 21 thus structured, each of the four leg parts 22a, and 23a vibrates in a form of a cantilever, that is, a primary vibration mode. Under this condition, if an angular velocity directing around a Z direction is applied to the vibrator 21, Coriolis force is generated in arrows B direction which is perpendicular to the direction of the driving vibration. The Coriolis forces become double forces which rotate the upper U-shaped member 22 and the lower U-shaped member 23 in directions opposite to each other. Since the double forces act on the piezoelectric plates 24 and 25, as a torsional force, sandwitched between the U-shaped members 22 and 23, a voltage in proportion to the Coriolis force is generated between the opposed surfaces of each of the piezoelectric plates 24 and 25. The voltage is outputted from a terminal B through the metal plate 26 contacting both to the piezoelectric plates 24 and 25. The Coriolis force is determined by the output voltage, and the angular velocity applied to the vibration gyro is determined by calculating the Coriolis force.

In the above operation, the leg parts 22a and 23a form a cantilever and vibrate in the primary vibration mode. Therefore, since the leg parts 22a and 23a vibrate in the primary vibration mode, the double forces of the Coriolis force become the largest and therefore the torsional force applied to the piezoelectric plates 24 and 25 becomes the largest. Accordingly, the piezoelectric plates 24 and 25 output the largest voltage. Hence, the Coriolis force can be obtained at the largest.

The vibration gyro of the first embodiment of the invention described above employs two piezoelectric plates because it may cause a problem for detecting an output from the piezoelectric plates if both the sides of the piezoelectric plate contact to the U-shaped member while the U-shaped members 22 and 23 itself are utilized for earthing the driving and detecting piezoelectric elements as described in the above embodiment. However, it may be applicable that the gyro is provided with a single piezoelectric plate (upper piezoelectric plate 24, for example) and merely an insulating plate in place of the lower piezoelectric plate 25.

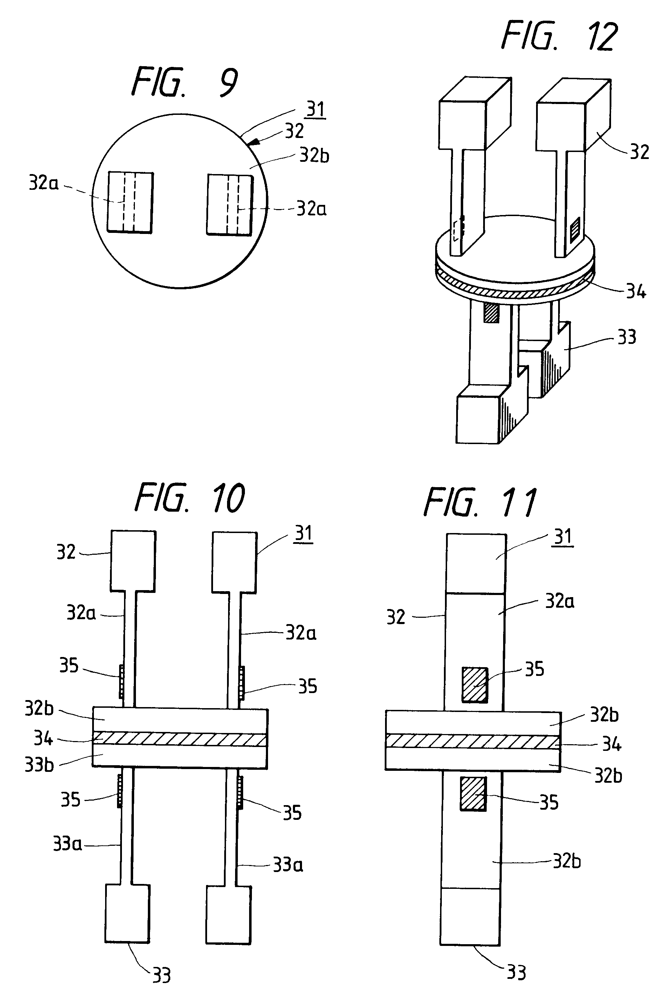

Figs. 8 to 11 show a vibration gyro 31 of the second embodiment according to the present invention. Specifically, Fig. 8 is a perspective view of a vibration gyro according to the second embodiment of the present invention. Fig. 9 is a top view of the vibration gyro shown in Fig. 8. Figs. 10 and 11 show a front and side views, respectively, of the vibration gyro of Fig. 8.

In the second embodiment, substantially U-shaped members 32 and 33 consist of disc-shaped base parts 32b and 33b and a pair of leg parts 32a and 33a unitary formed with the base parts 32b and 33b, respectively. The base parts 32b and 33b are held in contact with each other through a single piezoelectric plate 34. Driving piezoelectric elements 35A and 35B are mounted on the leg parts 32a, 33a polarities of which are opposite to each other. In this vibration gyro, at least one side of the piezoelectric plate 34 has to be insulated from the U-shaped member in order to detect a voltage being independent from the driving voltage. However, if the U-shaped member is not formed of a metal material but of a material having no conductivity, the piezoelectric plate may not have to be insulated. In this case, another earth means should be provided.

Although no supporting system supporting the vibrator 31 is shown in the drawings, outer periphery of the base parts 32b, 33b may be supported while the vibrator is not prevented from rotating, or a supporting bar may be provided which bar vertically passes through a center portion of the base parts 32b and 33b.

The operation of the above-described second embodiment will be described.

When the four driving piezoelectric elements 35A and 35B are actuated, the leg parts 32a, 33a of the vibrator 31 vibrate in a primary vibration mode in which upper and lower legs bend opposite to each other and right and left legs bend opposite to each other as indicated in arrows A direction shown in Fig. 8. Under this condition, if an angular velocity directing around a Z axis is applied to the vibrator 31, Coriolis force is generated which force directs in a direction of arrows B perpendicular to the direction of the driving vibration. The Coriolis force acts as a double force which rotates the upper and lower U-shaped members 32 in opposite direction to each other. The double forces act as a torsional force on the piezoelectric plate 34 disposed between the base parts 32b and 33b so that the piezoelectric plate 34 generates a voltage which is in proportion to the Coriolis force.

In the second embodiment, four leg parts 32a and 33a form a cantilever during the vibration. In other words, the vibrator 31 vibrates in a primary vibration mode. Therefore the largest Coriolis force can be detected.

Fig. 12 is a perspective view showing a third embodiment of the vibration gyro 31′ according to the present invention. As shown in Fig. 12, the vibration gyro is provided with an upper U-shaped member 32′and lower U-shaped member 33′ disposed perpendicularly to the upper member 32′ viewing from the top. Other parts and components are the same as that of the second embodiment shown in Fig. 8. Such a structure is advantageous in that a force applied to the vibrator is uniformly distributed with respect to a circumference direction and therefore the vibrator will smoothly be operated.

In the first to third embodiments described above, the piezoelectric elements 27A, 27B and 35 are mounted on the leg parts of the U-shaped member driving the vibrator and the piezoelectric plates 24, 25 and 34 are utilized as detecting elements. However, it may be applicable that the piezoelectric plates 24, 25 and 34 are employed for driving the vibrator and the piezoelectric members 27A, 27B and 35 are for the detection.

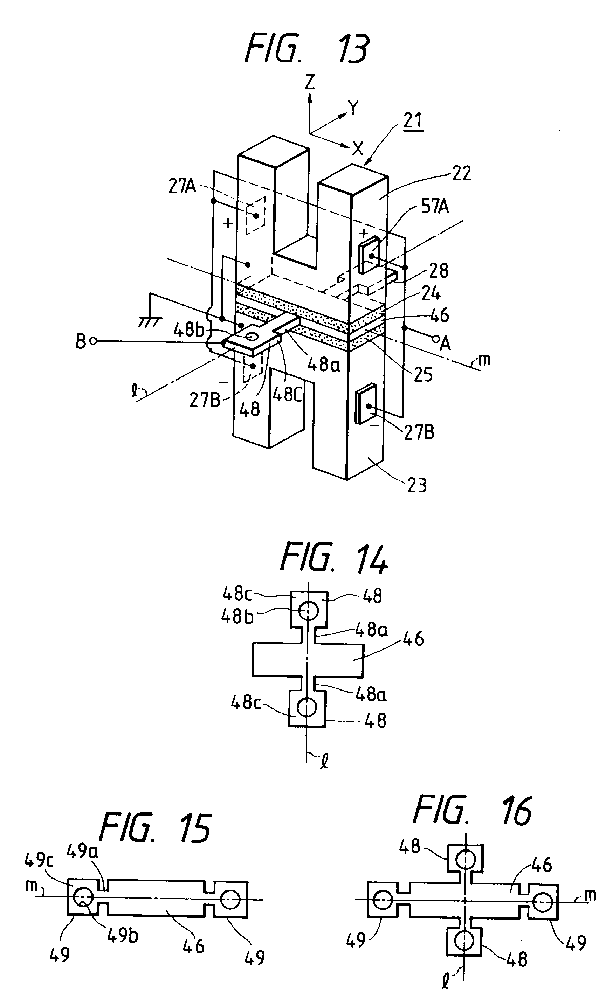

Figs. 13 to 16 show a fourth embodiment of the vibration gyro according to the present invention. Specifically, Fig. 13 is a perspective view showing a vibration gyro according to the fourth embodiment of the present invention. This gyro 21′ is substantially the same in shape and function as that of the first embodiment shown in Figs. 4 and 5. However, the vibration gyro 21′ of the fourth embodiment is provided with projecting parts 48 unitary formed with a detecting metal plate 46.

In the fourth embodiment, the projecting parts 48 are unitary formed with the detecting metal plate 46 by cutting a single metal plate out or the like. The projecting parts 48 have a narrow neck part 48a and a mounting part 48c with a mounting hole 48b as shown in Fig. 14. The projecting parts 48 extend from both the sides of the plate 46 in a direction of a center line l passing through a center point of the H-shaped vibrator 21′.

In the vibration mode of the driving and detecting vibrations, a point of the vibrator through which a front center line l (one-dot line) passes and a point through which a side center line m (one-dot line) passes do not move during the vibrations. In the sixth embodiment, since the vibrator 21 is supported by the projecting part 48 through which the front center line l passes, that is, the vibrator 21 is supported on a point which does not move during the vibrations, both the driving and detecting vibrations are stably operated. Accordingly, a stability of the detection can be improved.

Further, since the projecting part 48 for supporting the vibrator is unitary formed with the detecting metal plate 46, the detecting voltage can be taken from the projecting part 48 thereby canceling an intricate lead wire.

The projecting part may not be limited to that shown in Fig. 14. That is, the projecting part may be formed as shown in Fig. 15 or Fig. 16. Fig. 15 shows projecting parts 49 extending on the side center line m. Each of the projecting part 49 is provided with a narrow neck part 49a and a mounting part 49c with a mounting hole 49b. On the other hand, Fig. 16 shows another arrangement having both the projecting parts 48 shown in Fig. 14 and the projecting parts 49 shown in Fig. 15. In this arrangement, since the vibrator 21′ is supported by the four projecting parts 48 and 49, the vibrator 21′ can be firmly and stably supported.

As described above, according to the present invention, a vibrator may consist of a pair of substantially U-shaped members adhered opposite to each other through a piezoelectric plate generating a voltage in response to a torsional force applied between the opposite surfaces of the adhered surfaces of the piezoelectric plates. Therefore, the detecting voltage of the Coriolis force can be obtained at the largest. Further, the piezoelectric plate does not have to be thickened, the vibration gyro can be made small in size.

Further, since the detecting piezoelectric plate may be provided with a plurality of projecting parts supporting the vibrator, the vibrator can be supported at a portion which does not move during the vibration of the vibrator thereby improving a stability of the detected voltage of the detecting piezoelectric plate. Further, the voltage can be taken from the projecting parts of the detecting piezoelectric plate which projecting parts support the vibrator, no electric wire is necessary and the gyro can be advantageously made simple in structure. Further, since the projecting parts are unitary formed with the detecting piezoelectric plate, the supporting system has a sufficient mechanical strength.

## Claims

1. A vibration gyro (21; 21'; 31; 31') comprising:
a. a vibrating means (22,23; 32,33; 32',33') consisting of a pair of members (22/23; 32/33; 32'/33') each of them having a pair of leg parts (22a,23a; 32a,33a; 32'a,33'a) extending in a lengthwise direction of the member and a base part (22b,23b; 32b,33b; 32'b,33'b) extending in a widthwise direction of the member substantially perpendicular to the lengthwise direction, the leg parts (22a,23a; 32a,33a; 32'b,33'a) and the base part (22b,23b; 32b,33b; 32'a,33'b) giving the member a substantially U-shaped form, the pair of members (22/23; 32/33; 32'/33') being so connected that their lengthwise directions are substantially aligned along a center line of the vibrating means (22, 23; 32,33; 32',33'), the base parts (22b, 23b; 32b,33b; 32'b,33'b) are facing each other and the leg parts are pointing away from each other,
b. driving means (27A,27B; 35A,35B) for driving the vibrating means (22,23; 32,33; 32',33');
c. piezoelectric detecting means (24,25; 34) for detecting Coriolis force generated by an angular rotation of the vibration gyro (21; 21'; 31; 31') and by a vibration of the vibrating means (22,23; 32,33; 32',33'); and
d. supporting means (48,49) for supporting the vibrating means (22,23; 32,33; 32',33');
**characterized** in that
e. the members (22/23; 32/33; 32'/33') are connected through a torsional piezoelectric structure (24,25,26; 32b,33b,34) of the detecting means (24,25; 34), the torsional piezoelectric structure (24,25,26; 32b,33b,34) being so disposed between the base parts (22b,23b; 32b,33b; 32'b,33'b) that a Coriolis force acting perpendicularly to the center line and rotating the members in opposite direction to each other torsionally deforms the torsional piezoelectric structure (24,25; 34) to produce an angular rotation detecting signal.

2. The vibration gyro of claim 1, wherein said driving means (27A,27B; 35A,35B) consists of one piezoelectric element (27A,27B; 35A,35B) for each of the four leg portions each of said four piezoelectric elements being mounted on a side surface of the corresponding leg portion (22a,23a; 32a,33a; 32'a,33'a) in the widthwise direction, the two piezoelectric elements (27A,27B; 35A,35B) of the leg portions of the same member having polarities equal to each other and two piezoelectric elements (27A,27B; 35A,35B) of leg portions of different members having polarities opposite to each other.

3. The vibration gyro of claim 1, wherein said torsional piezoelectric structure comprises two piezoelectric plates (24,25) disposed between said vibrating means (22,23; 32,33) and a metal plate (26; 46) disposed between said piezoelectric plates (24,25).

4. The vibration gyro of claim 1, wherein said torsional piezoelectric structure comprises one piezoelectric plate (24) disposed between said vibrating means (22,23) and a metal plate (26) disposed on one surface of said piezoelectric plate (24).

5. The vibrating gyro of claim 3 or 4, wherein said at least one piezoelectric plate (24,25) consists of two segments polarized bilaterally in opposite directions, generating a voltage in accordance with a torsional deformation applied thereto.

6. The vibration gyro of claim 5, wherein said two segments are longitudinally splitted.

7. The vibration gyro of claim 5, wherein said two segments are transversely splitted.

8. The vibration gyro of claim 1, wherein the base parts (32b,33b) are disc-shaped.

9. The vibration gyro of claim 8, wherein the torsional piezoelectric structure (32b,33b,34) comprises a disc-shaped plate (34).

10. The vibration gyro of claim 9, wherein said vibrating means (32,33; 32',33') is formed of a conductive material.

11. The vibration gyro of claim 9 or 10, wherein at least one side of said detecting piezoelectric plate (34) is insulated from said vibrating means (32,33; 32',33').

12. The vibration gyro of one of claims 8 or 9, wherein said vibrating means (32,33; 32',33') is formed of a non-conductive material, said vibration gyro (31;31') further comprising means for earthing.

13. The vibration gyro of one of claims 8 to 12, wherein the widthwise directions of the members (32',33') are oriented perpendicularly to each other.

14. The vibration gyro of claims 1 and 13, wherein said supporting means comprises at least one projection (48,49) unitarily formed with said metal plate (46).

15. The vibration gyro of claim 14, wherein said projection (48,49) extends on the center line (1) of said vibrating means (22,23).

16. The vibration gyro of claim 15, wherein said projection (48) extends to a thickness direction (1) of said vibrating means (22,23) perpendicular to the widthwise direction and the lengthwise direction.

17. The vibration gyro of claim 15, wherein said projection (49) extends to the widthwise direction (m) of said vibrating means.

18. The vibration gyro of claim 15, wherein said projection (48,49) extends to the thickness (1) and the widthwise (m) direction of said vibrating means (21').

19. The vibration gyro of one of the preceding claims, wherein said vibrating means vibrates in a primary vibration mode by said driving means.

20. The vibration gyro of claim 1, wherein said supporting means passes through a longitudinal center of said vibrating means.

## Patentansprüche

1. Schwingkreisel (21; 21'; 31; 31') mit
a) einer Schwingvorrichtung (22,23; 32,33; 32',33') bestehend aus einem Paar von Gliedern (22/23; 32/33; 32'/33') mit jeweils einem Paar Schenkelabschnitte (22a,23a; 32a,33a; 32'a,33'a), die sich in Längsrichtung des Gliedes erstrecken, und einem Basisteil (22b;23b; 32b,33b; 32'b,33'b), das sich in Richtung der Breite des Gliedes im wesentlichen senkrecht zur Längsrichtung erstreckt, wobei die Schenkelabschnitte (22a,23a; 32a,33a; 32'a,33'a) und das Basisteil (22b,23b; 32b,33b; 32'b,33'b) dem Glied eine im wesentlichen U-förmige Gestalt verleihen, und wobei die Paare von Gliedern (22/23; 32/33; 32'/33') so miteinander verbunden sind, daß Längsrichtungen im wesentlichen entlang einer Mittellinie der Schwingvorrichtung (22,23; 32,33; 32',33') ausgerichtet sind, die Basisteile (22b,23b; 32b,33b; 32'b,33'b) einander zugewandt sind und die Schenkelabschnitte von einander wegzeigen,
b) Antriebsmittel (27A,27B; 35A,35B) zum Antreiben der Schwingvorrichtung (22,23; 32,33; 32',33'),
c) piezoelektrische Erfassungsmittel (24,25; 34) zum Erfassen der durch Winkelrotation des Schwingkreisels (21; 21'; 31; 31') und Schwingung der Schwingvorrichtung (22,23; 32,33; 32',33') erzeugten Corioliskraft, und
d) Stützvorrichtung (48,49) zum Stützen der Schwingvorrichtung (22,23; 32,33; 32',33');
dadurch gekennzeichnet, daß
e) die Glieder (22/23; 32/33; 32'/33') durch eine piezoelektrische Torsionsstruktur (24,25,26; 32b,33b,34) des Erfassungsmittels (24,25; 34) verbunden sind, wobei die piezoelektrische Torsionsstruktur (24,25,26; 32b,33b,34) so zwischen den Basisteilen (22b,23b; 32b,33b; 32'b,33'b) angeordnet ist, daß eine senkrecht zu der Mittellinie wirkende und die Glieder in einander entgegengesetzter Richtung drehende Corioliskraft die piezoelektrische Torsionsstruktur (24,25; 34) drehverformt, um ein Erfassungssignal für die Winkelrotation zu erzeugen.

2. Schwingkreisel nach Anspruch 1, bei dem die Antriebsmittel (27A,27B; 35A,35B) aus einem piezoelektrischen Element (27A,27B; 35A,35B) für jeden der vier Schenkelabschnitte bestehen, wobei jedes der vier piezoelektrischen Elemente auf einer Seitenfläche des entsprechenden Schenkelabschnitts (22a,23a; 32a,33a; 32'a,33'a) in der Breitenrichtung angeordnet ist, wobei die beiden piezoelektrischen Elemente (27A,27B; 35A,35B) der Schenkelabschnitte desselben Glieds jeweils die gleiche Polarität haben, und zwei piezoelektrische Elemente (27A,27B; 35A,35B) der Schenkelabschnitte von verschiedenen Elementen einander entgegengesetzte Polaritäten haben.

3. Schwingkreisel nach Anspruch 1, bei dem die piezoelektrische Torsionsstruktur zwei piezoelektrische Platten (24,25) zwischen der Schwingvorrichtung (22,23; 32,33) und eine Metallplatte (26; 46) zwischen den piezoelektrischen Platten (24, 25) aufweist.

4. Schwingkreisel nach Anspruch 1, bei dem die piezoelektrische Torsionsstruktur eine piezoelektrische Platte (24), die zwischen der Schwingvorrichtung (22, 23) angeordnet ist, und eine Metallplatte (26), die auf einer Oberfläche der piezoelektrischen Platte (24) angeordnet ist, aufweist.

5. Schwingkreisel nach Anspruch 3 oder 4, bei dem mindestens eine piezoelektrische Platte (24,25) aus zwei Segmenten besteht, die bilateral entgegengesetzt gepolt sind, wobei eine Spannung entsprechend einer an ihnen hervorgerufenen Torsionsverformung erzeugt wird.

6. Schwingkreisel nach Anspruch 5, bei dem die beiden Segmente in Längsrichtung geteilt sind.

7. Schwingkreisel nach Anspruch 5, bei dem die beiden Segmente quergeteilt sind.

8. Schwingkreisel nach Anspruch 1, bei dem die Basisteile (32b,33b) scheibenförmig sind.

9. Schwingkreisel nach Anspruch 8, bei dem die piezoelektrische Torsionsstruktur (32b,33b, 34) eine scheibenförmige Platte (34) aufweist.

10. Schwingkreisel nach Anspruch 9, bei dem die Schwingvorrichtung (32,33; 32',33') aus einem leitfähigen Material besteht.

11. Schwingkreisel nach Anspruch 9 oder 10, bei dem mindestens eine Seite der piezoelektrischen Erfassungsplatte (34) von der Schwingvorrichtung (32,33; 32',33') isoliert ist.

12. Schwingkreisel nach einem der Ansprüche 8 oder 9, bei dem die Schwingvorrichtung (32,33; 32',33') aus einem nichtleitenden Material besteht, wobei der Schwingkreisel (31;31') außerdem Erdungsmittel aufweist.

13. Schwingkreisel nach einem der Ansprüche 8 bis 12, bei dem die Breitenrichtungen der Glieder (32',33') senkrecht zueinander verlaufen.

14. Schwingkreisel nach Anspruch 1 und 13, bei dem die Stützvorrichtung mindestens einen einstückig mit der Metallplatte (46) ausgebildeten Vorsprung (48,49) aufweist.

15. Schwingkreisel nach Anspruch 14, bei dem sich der Vorsprung (48,49) auf der Mittellinie (1) der Schwingvorrichtung (22,23) erstreckt.

16. Schwingkreisel nach Anspruch 15, bei dem sich der Vorsprung (48) in die Richtung 1 der Dicke der Schwingvorrichtung (22,23) rechtwinklig zur Breitenrichtung und zur Längsrichtung erstreckt.

17. Schwingkreisel nach Anspruch 15, bei dem sich der Vorsprung (49) in die Breitenrichtung (m) der Schwingvorrichtung erstreckt.

18. Schwingkreisel nach Anspruch 15, bei dem sich der Vorsprung (48,49) in die Dickenrichtung (1) und die Breitenrichtung (m) der Schwingvorrichtung (21') erstreckt.

19. Schwingkreisel nach einem der vorangehenden Ansprüche, bei dem die Schwingvorrichtung durch das Antriebsmittel in einer Primärschwingungsart versetzt wird.

20. Schwingkreisel nach Anspruch 1, bei dem die Stützvorrichtung durch einen Längsmittelpunkt der Schwingvorrichtung verläuft.

## Revendications

1. Gyroscope oscillant (21; 21'; 31; 31') comprenant :
a. des moyens d'oscillation (22,23; 32,33) 32',33') constitues d'une paire d'éléments (22/23; 32/33; 32'/33') chacun d' eux comportant une paire de parties à branches (22A,23a; 32a,33a; 32a';33a') s'étendant dans le sens de la longueur de l'élément et une partie de base (22b,23b; 32b,33b; 32'b,33'b) s'étendant dans le sens de la largeur de l'élément sensiblement perpendiculaire au sens de la longueur, les parties à branches (22a, 23a; 32a, 33a; 32'a,33'a) et la partie de base (22b,23b; 32b,33b; 32b',33'b)donnant à l'élément une forme sensiblement en U, la paire d'éléments (22/23; 32/33; 32'/33') étant connectée de façon que les directions longitudinales soient sensiblement alignées le long d'une ligne centrale des moyens d'oscillation (22,23; 32,33; 32',33'), que les parties de base (22b, 23b; 32b,33b,32'b,33'b) soient en face l'une de l'autre et que les parties à branches s'écartent l'une de l'autre;
b. des moyens de commande (27A,27B; 35A,35B) pour commander les moyens d'oscillation (22,23; 32,33; 32',33');
c. des moyens de détection piézoélectriques (24,25; 34) pour détecter une force de Coriolis générée par une rotation angulaire du gyroscope oscillant (21; 21'; 31; 31') et par une oscillation des moyens d'oscillation (22,23; 32,33; 32',33'); et
d. des moyens de support (48,49) pour supporter les moyens d'oscillation (22,23; 32,33; 32',33');
caractérisé en ce que
e. les éléments (22/33; 32/33; 32',33') sont connectés à travers une structure piézoélectrique à torsion (24,25,26; 32b,33b,34) des moyens de détection (24,25; 34), la structure piézoélectrique à torsion (24,25,26; 32b,33b,34) étant disposée entre les parties de base (22b,23b;32b,33b; 32'b,33'b) de telle sorte qu'une force de Coriolis agissant perpendiculairement à la ligne centrale et faisant tourner les éléments dans une direction opposée l'un par rapport à l'autre déforme par torsion la structure piézoélectrique à torsion (24,25; 34) pour produire un signal de détection de rotation angulaire.

2. Gyroscope oscillant selon la revendication 1, dans lequel lesdits moyens de commande (27A,27B; 35A,35B) sont constitués d'un élément piézoélectrique (27A,27B; 35A,35B) pour chacune des quatre parties à branches chacun desdits quatre éléments piézoélectriques étant monté sur une surface latérale de la partie de branche correspondante (22a, 23a; 32a, 33a; 32'a,33'a) dans la direction de la largeur ,les deux éléments piézoélectriques (27A,27B; 35A,35B) des parties à branches du même élément ayant des polarités égales l'une à l'autre et les deux éléments piézoélectriques (27A,27B; 35A,35B) des parties à branches des éléments différents ayant des polarités opposées l'une à l'autre.

3. Gyroscope oscillant selon la revendication 1, dans lequel ladite structure piézoélectrique à torsion comporte deux plaques piézoélectriques (24,25) disposées entre lesdits moyens d'oscillation (22,23; 32,33) et une plaque métallique (26; 46) disposée entre lesdites plaques piézoélectriques (24,25).

4. Gyroscope oscillant selon la revendication 1, dans lequel ladite structure piézoélectrique à torsion comprend une plaque piézoélectrique (24) disposée entre lesdits moyens d'oscillation (22,23) et une plaque métallique (26) disposée sur une surface de ladite plaque piézoélectrique (24).

5. Gyroscope oscillant selon la revendication 3 ou 4, dans lequel ladite au moins une plaque piézoélectique (24,25) est constituée de deux segments polarisés bilatéralement dans des directions opposées, générant une tension suivant une déformation torsionnelle qui lui est appliquée.

6. Gyroscope oscillant selon la revendication 5, dans lequel lesdits deux segments sont divisés longitudinalement.

7. Gyroscope oscillant selon la revendication 5, dans lequel lesdits deux segments sont divisés transversalement.

8. Gyroscope oscillant selon la revendication 1, dans lequel les parties de base (32b,33b) sont en forme de disque.

9. Gyroscope oscillant selon la revendication 8, dans lequel la structure piézoélectrique à torsion (32b, 33b, 34) comporte une plaque en forme de disque (34).

10. Gyroscope oscillant selon la revendication 9, dans lequel lesdits moyens d'oscillation (32,33; 32',33') sont formés d'un matériau conducteur.

11. Gyroscope oscillant selon la revendication 9 ou 10, dans lequel au moins un côté de ladite plaque piézoélectrique de détection (34) est isolé desdits moyens d'oscillation (32,33; 32',33').

12. Gyroscope oscillant selon l'une quelconque des revendications 8 ou 9, dans lequel lesdits moyens d'oscillation (32,33; 32',33') sont formés d'un matériau non conducteur, ledit gyroscope oscillant (31,31') comprenant de plus un moyen de mise à la terre .

13. Gyroscope oscillant selon l'une quelconque des revendications 8 à 12, dans lequel les directions de la longueur des éléments (32',33') sont orientées perpendiculairement l'une à l'autre.

14. Gyroscope oscillant selon la revendication 1 et 13, dans lequel lesdits moyens de support comprennent au moins une avancée (48,49) façonnée solidairement avec ladite plaque métallique (46).

15. Gyroscope oscillant selon la revendication 14, dans lequel ladite avancée (48,49) s'étend sur la ligne centrale (1) desdits moyens d'oscillation (32,33).

16. Gyroscope oscillant selon la revendication 15, dans lequel ladite avancée (48) s'étend vers une direction d'épaisseur (1) desdits moyens d'oscillation (22,23) perpendiculaire à la direction de la largeur et à la direction de la longueur.

17. Gyroscope oscillant selon la revendication 15, dans lequel ladite avancée (49) s'étend en direction de la largeur (m) desdits moyens d'oscillation.

18. Gyroscope oscillant selon la revendication 15, dans lequel ladite avancée (48,49) s'étend vers l'épaisseur (1) et la direction de la largeur (m) desdits moyens d'oscillation (21').

19. Gyroscope oscillant selon l'une des revendications précédentes, dans lequel lesdits moyens d'oscillation vibrent dans un mode d'oscillation fondamental par l'action desdits moyens de commande.

20. Gyroscope oscillant selon la revendication 1, dans lequel lesdits moyens de support passent à travers un centre longitudinal desdits moyens d'oscillation.
